# EUROPÄISCHE PATENTSCHRIFT

(11) **EP 3 851 327 B1**
(45) Veröffentlichungstag und Bekanntmachung des Hinweises auf die Patenterteilung: **07.06.2023**
(21) Anmeldenummer: 21150839.5
(22) Anmeldetag: 11.01.2021
(51) Int. Cl.: B60R 11/04, G02B 27/00

(54) **FAHRZEUGKAMERA MIT EINER SCHUTZEINRICHTUNG ZUR REDUZIERUNG VON VERSCHMUTZUNG UND/ODER VON UMWELTEINFLÜSSEN, DIE EIN SICHTFELD DER KAMERAOPTIK STÖREN KÖNNEN**
VEHICLE CAMERA WITH A PROTECTIVE DEVICE FOR REDUCING POLLUTION AND / OR ENVIRONMENTAL FACTORS WHICH CAN INTERFERE WITH THE FIELD OF VIEW OF CAMERA LENSES
CAMÉRA DE VÉHICULE DOTÉ D'UN DISPOSITIF DE PROTECTION PERMETTANT DE RÉDUIRE LA POLLUTION ET/OU LES INFLUENCES ENVIRONNEMENTALES POUVANT PERTURBER UN CHAMP DE VISION DE L'OPTIQUE DE CAMÉRA

(30) Priorität: 20.01.2020 DE 102020000312
(43) Veröffentlichungstag der Anmeldung: 21.07.2021
(73) Patentinhaber: MAN Truck & Bus SE, 80995 München (DE)
(72) Erfinder: Saegeler, Sebastian, 80995 München (DE); Buta, Gabor, 85757 Karlsfeld (DE)
(74) Vertreter: v. Bezold & Partner Patentanwälte - PartG mbB

(56) Entgegenhaltungen:
- EP-A1- 1 550 580
- EP-A1- 3 272 589
- JP-A- 2003 219 226

## Beschreibung

Die Erfindung betrifft ein Fahrzeug mit einer an einem Außenbereich des Fahrzeugs angeordneten Kamera und einer Schutzeinrichtung zur Reduzierung von Verschmutzung und/oder von Umwelteinflüssen, die ein Sichtfeld der Optik stören können.

Wie es aus der Praxis bekannt ist, sind bei Kraftfahrzeugen abhängig von dem Typ des Kraftfahrzeugs, wie beispielsweise Krafträdern, Kraftfahrzeugen zur Personenbeförderung, Kraftfahrzeugen zur Güterbeförderung usw., sogenannte Sichtfelder gesetzlich vorgegeben, welche durch eine Einrichtung für indirekte Sicht, herkömmlicherweise einen Spiegel, abgebildet werden müssen und durch den auf einem Fahrersitz sitzenden Fahrer jederzeit über die Einrichtung für indirekte Sicht einsehbar sein müssen. In Abhängigkeit vom Typ des Fahrzeugs und insbesondere davon, welche Bereiche rund um das Fahrzeug vom Fahrer direkt eingesehen werden können, verlangen in Abhängigkeit vom Fahrzeugtyp unterschiedliche gesetzliche Vorschriften, dass bestimmte Sichtfelder mittels der Einrichtungen für indirekte Sicht jederzeit eingesehen werden können. So ist für Nutzfahrzeuge, wie beispielsweise LKWs oder Lieferwagen, derzeit beispielsweise als Einrichtungen zur indirekten Sicht ein Hauptspiegel auf jeweils der Fahrerseite und der Beifahrerseite vorgesehen, mit welchem der Fahrzeugführer einen ebenen und horizontalen Teil der Fahrbahn von bestimmter Breite einsehen kann, der sich ab einer festgelegten Entfernung hinter den Augenpunkten des Fahrzeugführers bis zum Horizont erstreckt.

Insbesondere bei Nutzfahrzeugen spielt das Sichtfeld unmittelbar vor und neben dem Fahrzeug eine wichtige Rolle. Die Einsicht dieses Bereichs ist, im Gegensatz zu PKWs, im vorgegeben Maße gesetzlich gefordert. So ist für zumindest einige der Nutzfahrzeuge eine Abbildung eines Sichtfelds durch z. B. einen Frontspiegel verlangt, mit welchem ein Sichtkegel bzw. Bereich unmittelbar vor dem Nutzfahrzeug, der sich in seitlicher Richtung über die beifahrerseitige Begrenzung des Nutzfahrzeugs hinaus erstreckt, durch den Fahrer einsehbar ist.

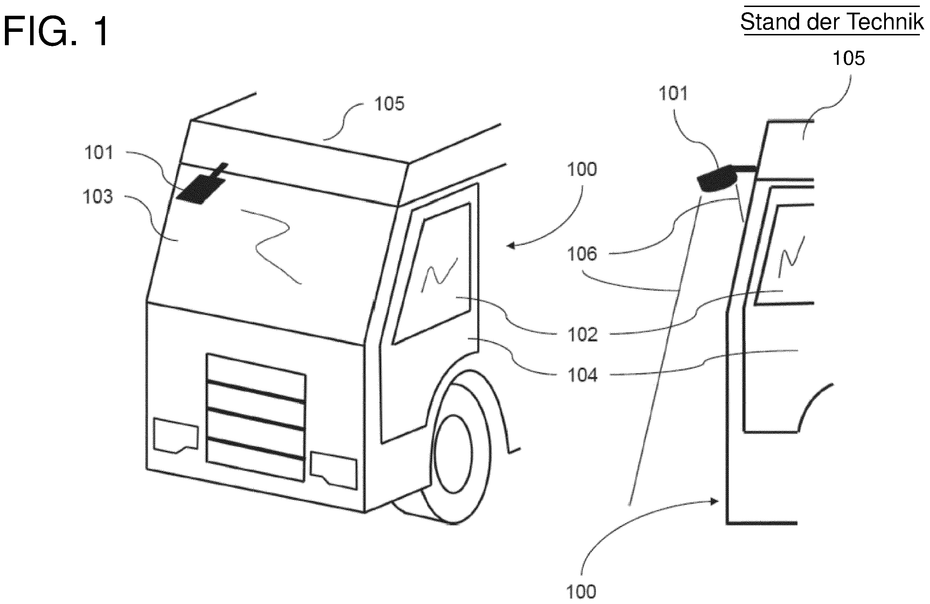

Zur Einhaltung des gesetzlich vorgegebenen Sichtfelds werden an Fahrzeugen (PKWs oder LKWs) bis dato hauptsächlich herkömmliche Spiegelsysteme verwendet. In Figur 1 ist in einer perspektivischen Vorderansicht (links in Figur 1) und einer Seitenteilansicht (rechts in Figur 1) beispielhaft ein Frontspiegel 101 eines Nutzfahrzeugs 100 zur Bereitstellung eines solchen gesetzlich vorgegebenen Sichtfelds dargestellt. Der Frontspiegel 101 ist an einem vorderen Bereich des Dachs 105 befestigt und erfasst mit seinem Sichtfeld 106 einen Nahfeldbereich vor der Windschutzschutzscheibe 103 und vor dem vorderen Fahrbereich. Entsprechende Spiegelsysteme können in an sich bekannter Weise weitere Spiegel (nicht dargestellt) für andere gesetzlich vorgegebene Sichtfelder umfassen, z. B. im Bereich der Seitenscheiben 102 oder Türen 104.

Aus dem Stand der Technik sind ferner bereits Spiegelersatzsysteme als Kamera-Monitor-Systeme (KMS) allgemein bekannt. Ein solches Spiegelersatzsystem besteht wenigstens aus einer ein Umfeld des Kraftfahrzeugs in einem Kamerabild in Echtzeit erfassenden und aufnehmenden Kamera, einem Steuergerät, dem Bilddaten aus der wenigstens einen Kamera zur Bearbeitung zugeführt werden, und wenigstens einem Monitor als Bildschirm im Sichtfeld eines Fahrers, der an das Steuergerät zur Darstellung eines Monitorbildes des von der Kamera erfassten aktuellen Kamerabildes angeschlossen ist.

So wird zum Beispiel in EP 1 550 580 A1 eine Spiegelersatzkamera nach dem Oberbegriff von Anspruch 1 gezeigt, die an der Sonnenblende im oberen Bereich vor der Frontscheibe eines Nutzfahrzeugs angebracht ist, und die das Sichtfeld des gesetzlich vorgeschriebenen Frontspiegels abdeckt.

JP 2003 219226A zeigt eine Kameraanordnung, deren Optik im unteren Frontbereich eines Fahrzeugs montiert wird, um das Nahfeld unmittelbar vor dem Fahrzeug einsehen zu können, das für die direkte Sicht des Fahrers verdeckt ist.

Die Kameras können dabei entweder an einer nach außen abstehenden Halterung angebracht sein, oder, wie in EP 3 272 589 A1 gezeigt, direkt in die Fahrzeugkarosserie integriert sein. Bei Nutzfahrzeugen können Kameras verwendet werden, die die Sichtbereiche der üblichen Einzelspiegel erfassen und alle Sichtfelder einer Fahrzeugseite in einem Monitorbild vereinigen. Ein solches Spiegelersatzsystem kann anstelle der bisherigen Spiegelanordnungen verwendet werden oder gegebenenfalls auch zusätzlich zu weiteren Außenspiegeln.

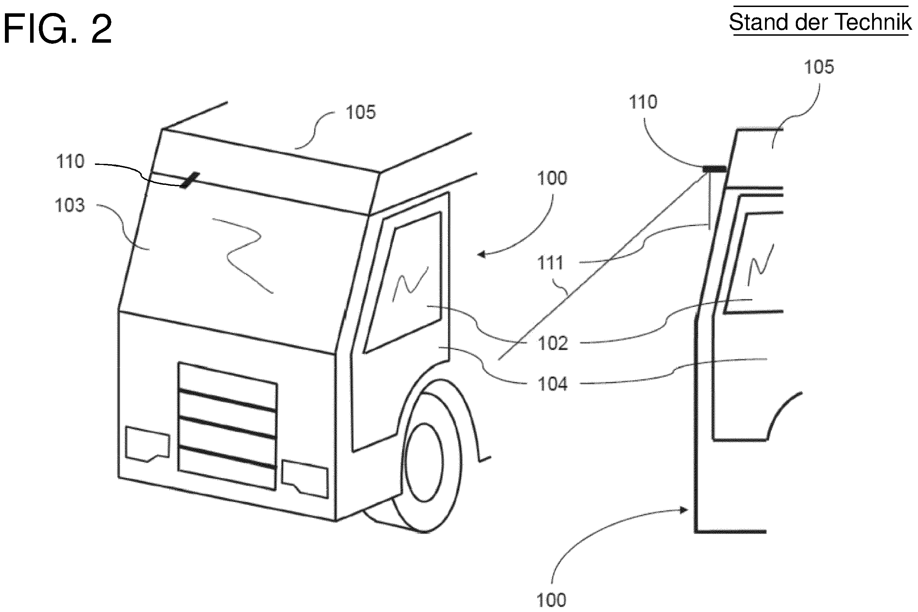

Eine derartige aus der Praxis bekannte Spiegelersatzkamera ist wiederum lediglich beispielhaft in Figur 2 schematisch illustriert. Die Spiegelersatzkamera ist beispielhaft als Frontspiegelersatzkamera 110 ausgeführt, die das indirekte Sichtfeld 106 eines herkömmlichen Frontspiegels 101 (vgl. Figur 1) erfasst bzw. den Sichtkegel 111 im Gegensatz zu einem herkömmlichen Frontspiegel 101 erweitern kann. Im angezeigten Kamerabild können zusätzliche Informationen eingeblendet werden, was zu einer Erhöhung der Sicherheit und des Komforts führen kann.

Neben einer derartigen Spiegelersatzkamera kommen ferner zunehmend weitere Außenkameras bei Kraftfahrzeugen zum Einsatz, die zur Umfelderfassung eines Kraftfahrzeugs eingesetzt werden.

Um die Funktion einer solchen Außenkamera zu gewährleisten, ist u. a. darauf zu achten, dass die Kameralinse frei von Schmutz oder Wasseransammlungen bleibt. Bei der Funktionsgewährleistung der optischen Überwachung des Fahrzeugvorfelds gestaltet sich die Sauberhaltung der Linse in besonderem Maße als anspruchsvoll. Grund hierfür ist, dass aufgrund des nach vorne gerichteten Blickfelds die Kameralinse gen Vorwärtsfahrtrichtung ausgerichtet sein muss. Die Kamera ist folglich bevorzugt an der Fahrzeugfront, z. B. am Dach 105, angebracht. Dadurch wird die Linse während der Fahrt zwangsläufig direkt vom Fahrtwind oder von der aufgewirbelten Gischt des vorausfahrenden Fahrzeugs mit Wasser, Schnee oder Schmutz beaufschlagt.

Die Beaufschlagung mit Schmutz und Wasser ist bei Langsamfahrt deutlich geringer als bei schnellerer Fahrt. Falls das Sichtfeld vor dem Fahrzeug nur im Stillstand oder bei Langsamfahrt relevant ist, können z. B. klappbare Kameramechanismen zum Einsatz kommen; ab einer bestimmten Fahrzeuggeschwindigkeit klappt die Kameralinse aus, um dann das vorgeschriebene Sichtfeld darstellen zu können. Alternativ ist aus der Offenlegungsschrift DE 199 61 389 A1 bekannt, eine Schutzabdeckung bereitzustellen, die bei Überschreitung einer vorgegebenen Vorwärtsgeschwindigkeit geschlossen wird.

Bei einem dauerhaft ausgeklappten, unbeweglichen Kamerasystem ist eine aktive Reinigung (z. B. durch Spritzwasser, Luftdruck oder integrierte Wischfunktion) denkbar. Beispielweise offenbart die Offenlegungsschrift DE 10 2014 213 282 A1 ein Kamerasystem für ein Fahrzeug, mit einer an einem Kameragehäuse angebrachten Optik, die eine nach außen weisende und Umwelteinflüssen ausgesetzte Oberfläche umfasst, die mit einer mit Druckluft oder Reinigungsflüssigkeit arbeitenden Reinigungsvorrichtung gereinigt werden kann.

Nachteilig an den vorstehend beschriebenen Ansätzen ist, dass die bekannten Schutzmechanismen (wie ein Mechanismus zur Bewegung der Schutzabdeckung oder ein Mechanismus zur aktiven Reinigung der Optik), um eine Optik der Kamera von Verschmutzung und/oder von Umwelteinflüssen, die ein Sichtfeld der Optik stören können, freizuhalten, konstruktiv aufwändig, kostenineffizient und wartungsaufwändig sind.

Es ist daher eine Aufgabe der Erfindung, einen verbesserten Ansatz bereitzustellen, mit dem Nachteile herkömmlicher Techniken zur Reduzierung von Verschmutzung und/oder von Umwelteinflüssen, die ein Sichtfeld der Optik einer Fahrzeugkamera stören können, vermieden werden können. Die Aufgabe der Erfindung ist es insbesondere, eine Schutzeinrichtung zur Reduzierung von Verschmutzung und/oder von Umwelteinflüssen, die ein Sichtfeld der Optik einer an einem Außenbereich eines Kraftfahrzeugs stören können, bereitzustellen, die kosteneffizient und wartungsarm ist.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt der Erfindung wird ein Fahrzeug bereitgestellt, das eine an einem Außenbereich des Fahrzeugs angeordnete Kamera aufweist. Das Fahrzeug kann ein Kraftfahrzeug, beispielsweise ein PKW, sein. Gemäß einer bevorzugten Ausführungsform ist das Kraftfahrzeug ein Nutzfahrzeug, wie beispielsweise ein Lastkraftwagen (LKW) oder ein Omnibus.

Die Kamera umfasst eine an einem Gehäuse der Kamera angebrachte Optik zur Umfelderfassung des Fahrzeugs, anhand eines nach vorne, d. h. in Vorwärtsfahrtrichtung unten und/oder schräg nach unten gerichteten Sichtfelds der Optik. Die Optik umfasst eine nach außen weisende Oberfläche, d. h. sich eine vom Gehäuse weg erstreckende und/oder abstehende Oberfläche. Die nach außen weisende Oberfläche der Optik kann die Kameralinse oder das Kameraobjektiv oder ein Teil hiervor sein.

Die Kamera umfasst ferner eine Schutzeinrichtung zur Freihaltung der Optik von Verschmutzung oder zumindest zur Reduzierung von Verschmutzung und/oder zur Reduzierung von Umwelteinflüssen, die ein Sichtfeld der Optik stören können.

Erfindungsgemäß ist die Schutzeinrichtung als eine Kappe ausgeführt, die nach unten geöffnet ist und in einem Bereich, der, in Vorwärtsfahrtrichtung des Fahrzeugs gesehen, vor der Optik liegt, die nach außen weisende Oberfläche der Optik umgibt und sich hierbei weiter als die Oberfläche nach unten erstreckt, d. h., ein unterer Randbereich der Kappe liegt in diesem Bereich tiefer als der tiefste Punkt der nach außen weisenden Oberfläche. "Nach unten" bedeutet hierbei in Bodenrichtung, d. h. die Richtung hin zur Fahrbahn oder zum unteren Bereich des Fahrzeugs. Mit anderen Worten ist die Kappe nach unten in Bodenrichtung geöffnet und/oder in Vorwärtsfahrtrichtung vor der Optik weiter nach unten gezogen, wodurch die Optik, vorzugsweise die Kameralinse, zuverlässig vor Verschmutzung geschützt wird, welche von vorne aus Fahrtrichtung durch einen Luftstrom kommend transportiert wird. Gleichzeitig ermöglich die Öffnung im unteren Bereich der Kappe ein freies Sichtfeld für die Kamera nach unten, so dass das Sichtfeld möglichst wenig, vorzugsweise überhaupt nicht, durch die Kappe beeinträchtigt wird.

Die Kappe ist aus einem optisch durchlässigen Material ausgeführt. Beispielsweise kann die Kappe aus Glas oder Plexiglas hergestellt sein.

Ein besonderer Vorzug der erfindungsgemäßen Schutzeinrichtung ist somit, dass eine Schutzeinrichtung ohne beweglichen Mechanismus oder aktive Reinigung bereitgestellt werden kann, um die Optik der Kamera vor Verschmutzung und/oder vor Umwelteinflüssen, die ein Sichtfeld der Optik stören können, zuverlässig zu schützen.

Die Kamera ist zur Erfassung eines gesetzlich vorgeschriebenen Sichtfelds ausgebildet, und eine Größe der Öffnung ist derart gewählt, dass die Optik das gesetzlich vorgeschriebene Sichtfeld erkennen kann, ohne dass der Rand der unteren Öffnung der Kappe dieses auf einem Kamerabild der Kamera penetriert.

Erfindungsgemäß ist die Optik relativ zur Kappe so ausgebildet und/oder angeordnet, dass das Sichtfeld größer als das gesetzlich vorgeschriebene Sichtfeld ist und der Rand der unteren Öffnung der Kappe zumindest einen Teil des äußeren Sichtfelds, der nicht das gesetzliche Sichtfeld umfasst, penetriert. Dabei ist die Kappe aus einem optisch durchlässigen Material ausgeführt, da dann das erfasste gesetzlich vorgeschriebene Sichtfeld nicht durch die Kappe beeinträchtigt wird, gleichzeitig jedoch das Gesamtsichtfeld durch die Kappe hindurch erweitert werden kann.

In einer weiteren Ausführungsform ist die Optik nicht an einer geometrisch tiefsten Stelle des Gehäuses angeordnet. Dadurch wird verhindert, dass Wassertropfen, der Schwerkraft folgend, über die Optik, z. B. die Kameralinse, fließen oder sich dort sogar sammeln.

Gemäß einer weiteren Ausführungsform weist das Gehäuse der Kamera an einer geometrisch tiefsten Stelle eine Kante oder Spitze auf zur Ausbildung einer Abtropfstelle für Wassertropfen. Dadurch können Wassertropfen, der Schwerkraft folgend, gezielt an der Abtropfstelle gesammelt und durch Abtropfen abgeführt werden.

Eine Weiterbildung dieser Ausführungsform sieht vor, dass die nach außen weisende Oberfläche der Optik und die Abtropfstelle derart voneinander beanstandet angeordnet sind, dass sich die Abtropfstelle außerhalb des Sichtfelds der Optik befindet. Auf diese Weise wird verhindert, dass sich an der Abtropfstelle sammelnde Wassertropfen das Sichtfeld beeinträchtigen.

In einer weiteren Ausführungsform ist die Kamera an einem vorderen oder seitlichen oberen Bereich des Fahrzeugs mittels eines abstehenden Arms am Fahrzeug befestigt, wobei der abstehende Arm vorzugsweise das Gehäuse der Kamera ausbildet.

Gemäß einer Weiterbildung dieser Ausführungsform weist der Arm an einer Unterseite eines distalen Endes, d. h. dem Fahrzeug abgewandten Ende, eine Schräge auf, an der die nach außen weisende Oberfläche der Optik und die Kappe angeordnet sind. Diese ermöglicht eine aerodynamisch vorteilhafte Anordnung der Kappe.

Gemäß einer besonders bevorzugten Ausführungsform der Erfindung ist die Kamera eine Frontkamera, die vorzugsweise zur Erfassung eines nach vorne, d. h. in Vorwärtsfahrtrichtung, unten und/oder schräg nach unten gerichteten Sichtfelds der Optik ausgebildet ist. Die Frontkamera kann beispielsweise eine Frontspiegelersatzkamera sein, d. h. als Ersatz eines herkömmlichen Frontspiegels dienen. Die Frontkamera kann an einem vorderen oder seitlichen Dachbereich des Fahrzeugs angeordnet sein.

Vorstehend wurde bereits festgestellt, dass die Kappe in einem Bereich, der, in Vorwärtsfahrtrichtung des Fahrzeugs gesehen, vor der Optik liegt, die nach außen weisende Oberfläche der Optik umgibt und sich hierbei weiter als die Oberfläche nach unten erstreckt. Ferner kann die Kappe so ausgebildet sein, dass die Kappe sich auch - in einem in Vorwärtsfahrtrichtung des Fahrzeugs gesehen - seitlichen Bereich, d. h. in einem Bereich, der seitlich zur Optik liegt, weiter als die nach außen weisende Oberfläche der Optik nach unten erstreckt. Hierdurch kann eine Verschmutzung der Optik durch einen seitlichen Fahrtwind verhindert oder zumindest zuverlässig reduziert werden.

Die Kamera kann eine Kamera zur Überwachung und Hindernisdetektion in einem Nahfeld, vorzugsweise einem Fahrzeugvorfeld und/oder einem Anfahrbereich, des Kraftfahrzeugs ausgebildet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische und eine seitliche Teilansicht eines Vorderbereichs eines Nutzfahrzeugs mit einem Frontspiegel gemäß dem Stand der Technik;
- Figur 2: eine perspektivische und eine seitliche Teilansicht eines Vorderbereichs eines Nutzfahrzeugs mit einer Frontspiegelersatzkamera gemäß dem Stand der Technik; und
- Figur 3: eine seitliche Detailansicht einer Kamera gemäß einer Ausführungsform der Erfindung.

Gleiche oder äquivalente Elemente sind in allen Figuren mit denselben Bezugszeichen bezeichnet und zum Teil nicht gesondert beschrieben.

Die aus dem Stand der Technik bekannten Ansätze, die in den Figuren 1 und 2 schematisch illustriert sind, wurden vorstehend bereits beschrieben.

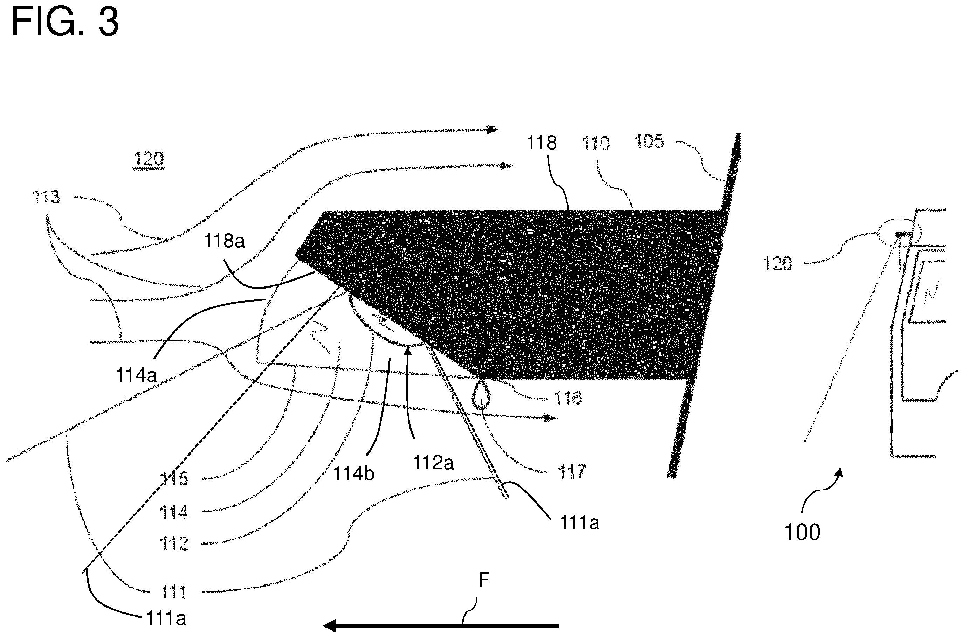

Figur 3 zeigt in der Darstellung rechts eine seitliche Teilansicht eines Fahrzeugs, hier ausgeführt als Nutzfahrzeug, an dessen vorderem Dachbereich eine Frontkamera 120 gemäß einer Ausführungsform der Erfindung befestigt ist. Figur 3 zeigt in der der Darstellung links dann eine Detailansicht der Kamera 120 gemäß einer Ausführungsform der Erfindung.

Die Kamera 120 weist eine an einem Kameragehäuse 110 angeordnete Optik 112, vorliegend in Form einer Kameralinse, auf. Die Optik bzw. die Kameralinse 112 dient zur Umfelderfassung des Fahrzeugs anhand eines nach unten und nach vorne gerichteten Sichtfelds 111. Die Kamera dient somit als Frontkamera zur optischen Überwachung des Fahrzeugvorfelds. Die Kameralinse 112 weist eine nach außen weisende Oberfläche 112a auf.

Wichtiger Bestandteil dieser Ausführung ist eine Kappe 114 um die Kameralinse 112, die in dem gezeigten Ausführungsbeispiel aus einem optisch durchlässigen Material hergestellt ist, z. B. Glas oder Plexiglas. Die Kappe 114 ist in Vorwärtsfahrtrichtung F vor der Linse 112 weiter nach unten gezogen. Mit anderen Worten weist die Kappe einen vorderen Bereich 114a auf, der, in Vorwärtsfahrtrichtung F des Fahrzeugs gesehen, vor der Optik 112 liegt und die nach außen weisende Oberfläche 112a der Optik 112 umgibt und sich hierbei weiter als die Oberfläche 112a nach unten erstreckt. Dadurch wird die Linse vor Verschmutzung geschützt, welche von vorne aus Fahrtrichtung durch den Luftstrom 113 kommend transportiert wird. Die Kappe 114 dient somit als Schutzeinrichtung zur Reduzierung von Verschmutzung und/oder von Umwelteinflüssen, die ein Sichtfeld der Optik stören können.

Im gezeigten Ausführungsbeispiel ist die Kappe 114 auch in einem Bereich 114b, der, in Vorwärtsfahrtrichtung (F) des Fahrzeugs gesehen, seitlich zur Optik liegt, weiter als die Linse 112 nach unten gezogen, um den Schutz vor Verschmutzung zu verbessern.

Nach unten, in Bodenrichtung, ist die Kappe geöffnet. Die Größe der Öffnung 115 ist mindestens so zu wählen, dass der Fahrer das gesetzlich vorgeschriebene Sichtfeld, hier beispielhaft dargestellt durch die gestrichelte Linie 111a, erkennen kann, ohne dass der Rand der Kappe 114 dieses auf dem Kamerabild penetriert. Das gesetzliche Sichtfeld 111a sollte sich im angezeigten Kamerabild innerhalb des sichtbaren Rands der Kappe befinden, was vorliegend dadurch erreicht wird, dass die Größe der Öffnung 115 so gewählt ist, dass die Optik 112 das gesetzlich vorgeschriebene Sichtfeld 111a erkennen kann, ohne dass der Rand der unteren Öffnung 115 der Kappe 114 dieses gesetzlich vorgeschriebene Sichtfeld 111a auf einem Kamerabild der Kamera 120 penetriert. Hierzu ist die Größe der Öffnung 115 so zu dimensionieren, dass der Rand der Öffnung 115 den Sichtkegel zur Erfassung des gesetzlich vorgeschriebenen Sichtfelds 111a der Optik 112 auf Höhe des Randes beabstandet umgibt und dieses Sichtfeld 111a somit nicht schneidet.

Des Weiteren soll die Kameralinse 112 so positioniert werden, dass sich die Linse 112 nicht am geometrisch tiefsten Punkt 116 des Kamerasystems befindet. Dadurch wird verhindert, dass Wassertropfen 117, der Schwerkraft folgend, über die Linse fließen oder sich dort sogar sammeln. Dieser geometrisch tiefste Punkt 116 dient somit als Abtropfstelle 116 und soll ferner so weit von der Linse entfernt positioniert werden, dass sich angesammelte Wassertropfen nicht im Sichtfeld/Sichtkegel der Linse befinden.

Im gezeigten Ausführungsbeispiel ist die Kamera 120 an einem vorderen oder seitlichen oberen Bereich des Fahrzeugs mittels eines abstehenden Arms 118 am Fahrzeug befestigt, wobei der abstehende Arm 118 gleichzeitig zumindest zum Teil das Gehäuse 110 der Kamera 120 ausbildet. Der Befestigungsarm 118 weist dabei an einer Unterseite eines distalen Endes eine Schräge 118a auf, an der die nach außen weisende Oberfläche 112a der Optik 112 und die Kappe 114 angeordnet sind.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 100: Fahrzeug, z. B. LKW
- 101: Spiegel, z. B. Frontspiegel,
- 102: Seitenscheibe
- 103: Windschutzscheibe
- 104: Türe
- 105: Dach
- 106: Sichtkegel Spiegel
- 110: Kameragehäuse
- 111: Sichtkegel Kamera
- 111a: Gesetzlich vorgeschriebenes Sichtfeld
- 112: Optik, z. B. Kameralinse
- 112a: Nach außen weisende Oberfläche der Optik
- 113: Luftstrom um Kamera
- 114: Kappe aus optisch durchlässigem Material
- 114a: Vorderer Bereich der Kappe
- 114b: Seitlicher Bereich der Kappe
- 115: Nach unten gerichtete Öffnung
- 116: Geometrisch tiefste Stelle des Kamerasystems / Abtropfstelle
- 117: Wassertropfen oder Schmutzpartikel
- 118: Befestigungsarm
- 118a: Schräge
- 120: Kamera
- F: Vorwärtsfahrtrichtung

## Patentansprüche

1. Fahrzeug, vorzugsweise Nutzfahrzeug (100), aufweisend eine an einem Außenbereich des Fahrzeugs angeordnete Kamera (120), wobei die Kamera umfasst:
eine an einem Gehäuse (110) der Kamera (120) angebrachte Optik (112) zur Umfelderfassung des Fahrzeugs, anhand eines nach unten, schräg nach unten und/oder nach vorne gerichteten Sichtfelds (111) der Optik, wobei die Optik (112) eine nach außen weisende Oberfläche (112a) umfasst; und
eine Schutzeinrichtung zur Reduzierung von Verschmutzung und/oder von Umwelteinflüssen, die ein Sichtfeld der Optik stören können;
wobei,
die Schutzeinrichtung als eine Kappe (114) ausgeführt ist, die nach unten geöffnet ist und in einem Bereich (114a), der, in Vorwärtsfahrtrichtung (F) des Fahrzeugs gesehen, vor der Optik (112) liegt, die nach außen weisende Oberfläche (112a) der Optik (112) umgibt und sich hierbei weiter als die Oberfläche (112a) nach unten erstreckt, **dadurch gekennzeichnet,**
**dass** die Kappe (114) aus optisch durchlässigem Material ausgeführt ist; und
**dass** die Optik (112) relativ zur Kappe (114) so ausgebildet und/oder angeordnet ist, dass das Sichtfeld (111) größer als ein gesetzlich vorgeschriebenes Sichtfeld (111a) ist und ein Rand einer unteren Öffnung (115) der Kappe (114) zumindest einen Teil des äußeren Sichtfelds (111), der nicht das gesetzliche Sichtfeld (111a) umfasst, penetriert.

2. Fahrzeug nach einem der vorhergehenden Ansprüche, wobei die Optik (112) nicht an einer geometrisch tiefsten Stelle des Gehäuses (110) angeordnet ist.

3. Fahrzeug nach einem der vorhergehenden Ansprüche, wobei das Gehäuse (110) der Kamera an einer geometrisch tiefsten Stelle (116) eine Kante oder Spitze zur Ausbildung einer Abtropfstelle für Wassertropfen (117) aufweist.

4. Fahrzeug nach Anspruch 3, wobei die nach außen weisende Oberfläche (112a) der Optik (112) und die Abtropfstelle (116) derart voneinander beanstandet angeordnet sind, dass sich die Abtropfstelle (116) außerhalb des Sichtfelds (111) der Optik (112) befindet.

5. Fahrzeug nach einem der vorhergehenden Ansprüche, wobei die Kappe (114) aus Glas oder Plexiglas hergestellt ist.

6. Fahrzeug nach einem der vorhergehenden Ansprüche, wobei die Kamera (120) an einem vorderen oder seitlichen oberen Bereich des Fahrzeugs mittels eines abstehenden Arms (118) am Fahrzeug befestigt ist, wobei der abstehende Arm (118) vorzugsweise das Gehäuse (110) der Kamera (120) ausbildet.

7. Fahrzeug nach Anspruch 6, wobei der Arm (118) an einer Unterseite eines distalen Endes eine Schräge (118a) aufweist, an der die nach außen weisende Oberfläche (112a) der Optik (112) und die Kappe (114) angeordnet sind.

8. Fahrzeug nach einem der vorhergehenden Ansprüche, wobei die Kamera (120) eine Frontkamera, beispielsweise eine Frontspiegelersatzkamera, ist, die vorzugsweise an einem vorderen oder seitlichen Dachbereich des Fahrzeugs angeordnet ist.

9. Fahrzeug nach einem der vorhergehenden Ansprüche, wobei die Kappe (114) die nach außen weisende Oberfläche (112a) der Optik zumindest in dem Bereich (114a), der, in Vorwärtsfahrtrichtung (F) des Fahrzeugs gesehen, vor der Optik (112) liegt, und in einem Bereich (114b), der, in Vorwärtsfahrtrichtung (F) des Fahrzeugs gesehen, seitlich zur Optik liegt, umgibt und sich hierbei weiter als die Oberfläche (112) nach unten erstreckt.

10. Fahrzeug nach einem der vorhergehenden Ansprüche,
a) wobei die Kamera (120) zur Überwachung und Hindernisdetektion in einem Nahfeld, vorzugsweise einem Fahrzeugvorfeld und/oder einem Anfahrbereich, des Kraftfahrzeugs ausgebildet ist; und/oder
b) wobei die Optik (112) ein nach vorne gerichtetes Sichtfeld (111) aufweist.

11. Fahrzeug nach einem der vorhergehenden Ansprüche, wobei das Fahrzeug ein Nutzfahrzeug, beispielsweise ein Lastkraftwagen oder Omnibus, ist.

## Claims

1. A vehicle, preferably a commercial vehicle (100), having a camera (120) arranged on an exterior region of the vehicle, wherein the camera comprises:
an optical unit (112), mounted on a housing (110) of the camera (120), for capturing the surroundings of the vehicle using a field of view (111) of the optical unit that is directed downwards, obliquely downwards and/or towards the front, wherein the optical unit (112) comprises a surface (112a) facing the outside; and
a protective device for reducing soiling and/or environmental influences that can disturb a field of view of the optical unit;
wherein
the protective device is designed in the form of a cap (114), which is open towards the bottom and surrounds the surface (112a) of the optical unit (112) facing the outside in a region (114a) that is located, viewed in the direction of forwards travel (F) of the vehicle, in front of the optical unit (112) and here extends further downwards than the surface (112a),
**characterized**
**in that** the cap (114) is made from a optically transparent material; and
**in that** the optical unit (112) is formed and/or arranged relative to the cap (114) such that the field of view (111) is greater than a field of view (111a) that is specified by statute and a periphery of a lower opening (115) in the cap (114) penetrates at least a portion of the outer field of view (111) that does not comprise the statutory field of view (111a).

2. The vehicle according to any of the preceding claims, wherein the optical unit (112) is not arranged at a geometrically deepest point of the housing (110).

3. The vehicle according to either of the preceding claims, wherein the housing (110) of the camera has, at a geometrically deepest point (116), an edge or tip for forming a drip-off point for water drops (117).

4. The vehicle according to Claim 3, wherein the surface (112a) of the optical unit (112) facing the outside and the drip-off point (116) are arranged at a distance from one another such that the drip-off point (116) is located outside the field of view (111) of the optical unit (112).

5. The vehicle according to any of the preceding claims, wherein the cap (114) is made from glass or acrylic glass.

6. The vehicle according to any of the preceding claims, wherein the camera (120) is attached to the vehicle at a front or lateral upper region of the vehicle by means of a projecting arm (118), wherein the projecting arm (118) preferably forms the housing (110) of the camera (120).

7. The vehicle according to Claim 6, wherein the arm (118) has on a lower side of a distal end a bevel (118a) at which the surface (112a) of the optical unit (112) facing the outside and the cap (114) are arranged.

8. The vehicle according to any of the preceding claims, wherein the camera (120) is a front camera, for example a front mirror replacement camera, which is preferably arranged at a front or lateral roof region of the vehicle.

9. The vehicle according to any of the preceding claims, wherein the cap (114) surrounds the surface (112a) of the optical unit facing the outside at least in the region (114a) that is located, viewed in the direction of forwards travel (F) of the vehicle, in front of the optical unit (112) and in a region (114b) that is located, viewed in the direction of forwards travel (F) of the vehicle, laterally of the optical unit, and here extends further downwards than the surface (112).

10. The vehicle according to any of the preceding claims,
a) wherein the camera (120) is designed to monitor and detect obstacles in a near field, preferably a field ahead of the vehicle and/or a start region, of the motor vehicle; and/or
b) wherein the optical unit (112) has a field of view (111) that is directed towards the front.

11. The vehicle according to any of the preceding claims, wherein the vehicle is a commercial vehicle, for example a lorry or an omnibus.

## Revendications

1. Véhicule, de préférence véhicule utilitaire (100), possédant une caméra (120) disposée au niveau d'une zone extérieure du véhicule, la caméra comprenant :
une optique (112) montée sur un boîtier (110) de la caméra (120) pour la couverture de l'environnement du véhicule, à l'aide d'un champ visuel (111) de l'optique dirigé vers le bas, en biais vers le bas et/ou vers l'avant, l'optique (112) comportant une surface (112a) orientée vers l'extérieur ; et
un dispositif de protection destiné à réduire l'encrassement et/ou les influences de l'environnement qui peuvent perturber un champ visuel de l'optique ;
le dispositif de protection étant réalisé sous la forme d'un chapeau (114) qui est ouvert vers le bas et se trouve dans une zone (114a) qui, vue dans la direction de la marche avant (F) du véhicule, se trouve devant l'optique (112), entoure la surface (112a) orientée vers l'extérieur de l'optique (112) et s'étend ainsi vers le bas plus loin que la surface (112a),
**caractérisé en ce**
**que** le chapeau (114) est réalisé dans un matériau optiquement transparent ; et
**que** l'optique (112) est configurée et/ou disposée par rapport au chapeau (114) de telle sorte que le champ visuel (111) est plus grand qu'un champ visuel prescrit légalement (111a) et un bord d'une ouverture inférieure (115) du chapeau (114) pénètre au moins dans une partie du champ visuel (111) extérieur qui ne comprend pas le champ visuel prescrit légalement (111a).

2. Véhicule selon l'une des revendications précédentes, l'optique (112) n'étant pas disposée à un endroit géométriquement le plus profond du boîtier (110).

3. Véhicule selon l'une des revendications précédentes, le boîtier (110) de la caméra possédant à un endroit géométriquement le plus profond (116) une arête ou une pointe destinée à former un point d'égouttement pour des gouttes d'eau (117).

4. Véhicule selon la revendication 3, la surface (112a) orientée vers l'extérieur de l'optique (112) et le point d'égouttement (116) étant disposés espacés l'un de l'autre de telle sorte que le point d'égouttement (116) se trouve en-dehors du champ visuel (111) de l'optique (112).

5. Véhicule selon l'une des revendications précédentes, le chapeau (114) étant fabriqué en verre ou en plexiglas.

6. Véhicule selon l'une des revendications précédentes, la caméra (120) étant fixée au véhicule au niveau d'une zone supérieure avant ou latérale du véhicule au moyen d'un bras en saillie (118), le bras en saillie (118) formant de préférence le boîtier (110) de la caméra (120)

7. Véhicule selon la revendication 6, le bras (118) possédant un chanfrein (118a) au niveau d'un côté inférieur d'une extrémité distale, au niveau duquel sont disposés la surface (112a) orientée vers l'extérieur de l'optique (112) et le chapeau (114).

8. Véhicule selon l'une des revendications précédentes, la caméra (120) étant une caméra avant, par exemple une caméra de substitution du rétroviseur avant, qui est de préférence disposée au niveau d'une zone de toit avant ou latérale du véhicule.

9. Véhicule selon l'une des revendications précédentes, le chapeau (114) entourant la surface (112a) orientée vers l'extérieur de l'optique au moins dans une zone (114a) qui, vue dans la direction de la marche avant (F) du véhicule, se trouve devant l'optique (112), et dans une zone (114b) qui, vue dans la direction de la marche avant (F) du véhicule, se trouve latéralement par rapport à l'optique, et s'étend ainsi vers le bas plus loin que la surface (112).

10. Véhicule selon l'une des revendications précédentes,
a) la caméra (120) étant configurée pour la surveillance et la détection d'obstacles dans un champ proche, de préférence un champ avant de véhicule et/ou une zone d'approche du véhicule automobile ; et/ou
b) l'optique (112) possédant un champ visuel (111) dirigé vers l'avant.

11. Véhicule selon l'une des revendications précédentes, le véhicule étant un véhicule utilitaire, par exemple un poids-lourd ou un autocar.
